# EUROPEAN PATENT APPLICATION

(11) **EP 1 906 611 A1**
(43) Date of publication of application: **02.04.2008**
(21) Application number: 06300997.1
(22) Date of filing: 28.09.2006
(51) Int. Cl.: H04L 27/26, H01Q 3/26

(54) **Method for improving inter cell interference cancellation in a cellular radio communication system and corresponding base station and subscriber station**

(71) Applicant: Alcatel Lucent, 75008 Paris (FR)
(72) Inventor: Münzner, Roland, 73266, Bisingen/Teck (DE)
(74) Representative: Wetzel, Emmanuelle

(57) **Abstract**

The present invention relates to a method for improving inter cell interference cancellation in an cellular radio communication system, said cellular radio communication system sending OFDM frames on an air interface, each OFDM frame comprising a pilot tones part and a payload part comprising a plurality of bursts.

According to the present invention the method comprises the steps of:
- Building a predefined number of sets of cells in said cellular radio communication network;
- Associating a predefined OFDM symbol of said OFDM frames to each set of cells, at least two different sets of cells being associated two different OFDM symbols of said OFDM frame
- Sending from a station belonging to a predefined set of cells a set of pilot tones in said predefined OFDM symbol associated to said set of cells.

## Description

### BACKGROUND OF THE INVENTION

The present invention relates to method for improving inter cell interference cancellation in an cellular radio communication system.

In cellular radio communication systems short frequency re-use distances provides for an optimisation of resource usage. Using short frequency re-use distance leads to a high amount of inter-cell interference which have to be coped with. Active cancellation of inter-cell interference is required to guaranty the efficiency of such high capacity networks based for example on OFDMA (Orthogonal Frequency Division Multiple Access) air interfaces.

Usual interference cancellation methods consisting in coordinating the resource allocation between different neighbour base stations in a manner that interference is minimized present the drawback to show a poor usage of the resources in the system and are not sufficient to provide a sufficient network capacity.

The trend in radio communication networks is however to reduce the frequency reuse distance to increase the capacity of the networks. This is especially a requirement for high density areas where the number of potential users may be very high so that the resource must be efficiently allocated. In such cases, interference occur between resources simultaneously allocated to several users in different cells as in systems being based on OFDM/OFDMA air interface.

OFDMA systems such as defined in IEEE 802.16e and at the WIMAX forum, and especially if they are equipped with beamforming technology (in which the multi antenna system is able to generate very directive beams adaptively following the moves of the user and in which active interference cancellation can be conducted through adaptively steering nulls in the antenna patterns into the directions of the strongest interfering signals) are preferably to be deployed with a short frequency reuse distance.

Active cancellation of inter-cell interference at the base station is eased by adaptive beamforming techniques - both for up-link as well as for down-link operation - and require a sufficient amount of OFDMA training tones, that need to be provided in the uplink by each subscriber station, in order to allow the base station to estimate the spatial signature of the desired signal and of the interfering signals.

Nevertheless, the standard OFDMA pilot tones, that are allocated with each uplink transmission in a given frequency and time domain are in most cases and for the sake of spectral efficiency of the system not available at a sufficiently high density for a precise enough estimation of the spatial signatures of desired and in particular of the interfering signals. For a better estimation of the spatial signature of the desired and the interfering signals, additional dedicated pilot tones are allocated, e.g. through dedicated preambles or sounding signals which in addition allow training for down-link transmission allocations.

In general those additional dedicated pilot tones have to be coordinated between the cells of the system, that are susceptible to give raise to inter cell interference among each other, in an optimised way to allow for most efficient estimation of the spatial signatures and channel conditions for both the desired and the interfering signals.

The allocations of these additional dedicated pilot tones thereby have to fulfil several requirements exposed in the following:

Firstly, from a system or multi-cell perspective, the pilot tones allocations have to cover the entire inter-cell interference situation for the bursts, they are covering, even though the inter-cell interference situation is likely to change over a given transmission burst for which the interference from other cells has to be cancelled.

Secondly, radio resource scheduling for each individual cell ideally shall not be subject to any constraints emerging from the need of allocating the dedicated training pilot tones for inter-cell interference cancellation.

Thirdly, the required allocations for training pilot tones shall be optimised for allowing the best inter-cell interference cancellation possible at lowest amount of required pilot tones.

Standard solutions use the allocations of dedicated pilot tones in front of each up-link transmission for training the interference cancellation algorithms in up-link and equivalently use for each of the downlink transmissions allocations of dedicated pilot tones in a preceding up-link frame for training the interference cancellation algorithms in down-link. This type of allocation strategy is pre-scribed e.g. in IEEE 802.-16-2004 resp. IEEE 802.16e-2005 through the way AAS (Adaptive Antenna System) preambles are defined. These type of pilot tones allocations for training interference cancellation algorithms suffer from several drawbacks.

The interference cancellation capability of the adaptive algorithms thereby strongly depend on the ratio of the signal quality of the pilot tones, corresponding to the desired signal, and those pilot tones, that are corresponding to the interfering signals, as the estimation of the spatial signatures for both the desired and the interfering signals are strongly dependent on this ratio.

A first way of organizing the pilot tones consists in that the pilot tones are either superposed in time and frequency and separated thanks to orthogonallity. Consequently, the training signals, corresponding to the desired signal, as well as those training signals, corresponding to all of the interfering signals, are multiplexed on the same set of OFDM tones. As in each cell a different training sequence - ideally satisfying some orthogonality condition - is employed the desired signal can be separated from the interfering signal through appropriate signal processing.

This solution suffers from a degradation of the inter-cell interference cancellation algorithms due to the high number and high total power of the interfering signals that are multiplexed with the desired signal which leads to a degradation of the estimation for the spatial signatures for the desired as well as for the interfering signals.

As it is desirable to have both the training for the desired as well as the training for the interfering signals being received separately, a second approach consists in allocating different OFDM tones or different time slots to all of the signals that are susceptible to create interference among each other. This means that each base station will be able to separately derive the spatial signatures of its desired signals from the spatial signatures of the corresponding interfering signals.

This second solution is characterized by an unrealistically high amount of required bandwidth as all the transmission allocations have to be separated in the time-frequency domain in order to allow a separation of the desired from the interfering signals at each base station.

Thus, these standard ways of allocating training sequences for active inter-cell interference cancellation does not meet the requirements stated above.

A particular object of the present invention is to provide for more reliable estimation of the spatial signature of interfering signals.

Another objects of the present invention is to provide a corresponding subscriber station and base stations sending pilot tones in accordance with the method.

### SUMMARY OF THE INVENTION

These objects, and others that appear below, are achieved by a method for improving inter cell interference cancellation in an cellular radio communication system according to claim 1, a base station according to claim 8, and a subscriber station according to claim 10.

According to the present invention and considering the uplink transmission direction, the subscriber stations are grouped in a predefined number of sets of cells, preferably using a frequency reuse scheme as known from cellular networks. The sets of pilot tones sent by all subscriber stations belonging to the same set of cells are superposed on the same first OFDM symbol, while the set of pilot tones sent by subscriber stations from another set of cells are superposed in a second OFDM symbol different from the first one.

The method according to the present invention presents the advantage to provide for an efficient allocation technique for the training signals used by adaptive inter-cell interference cancellation algorithms, that allows strong improvement of the estimation of the spatial signature of the interfering signals, especially in frequency re-use 1 networks.

Another advantage of the present invention consists in achieving a significant improvement of interference cancellation on data transmissions due to the improved estimation of the spatial signature of the interfering signals.

Further advantageous features of the invention are defined in the dependent claims.

### BRIEF DESCRIPTION OF THE DRAWINGS

Other characteristics and advantages of the invention will appear on reading the following description of a preferred embodiment given by the way of non-limiting illustrations, and from the accompanying drawings, in which:
- Figures 1 shows a OFDM frame structure able to support a method according to the present invention;
- Figures 2 shows a cellular network cell structure in which the method according to the present invention is used;
- Figure 3 shows a base station implementing the method according to the present invention;
- Figure 4 shows a subscriber station implementing the method according to the present invention.

### DETAILED DESCRIPTION OF THE INVENTION

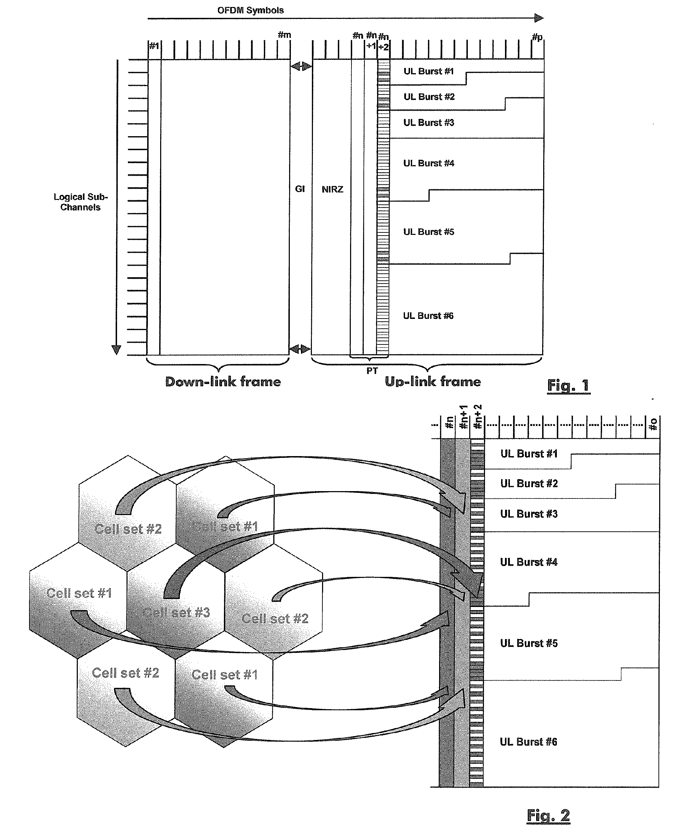

Figure 1 shows a OFDM frame structure able to support a method according to the present invention. This OFDM frame structure is used in the framework of a multi channel communication network employing OFDMA as technology on each sub-channel. OFMDA allows resource allocations in the frequency domain and in the time domain, where orthogonality of the resource elements in frequency domain, the so-called sub-carriers, allows for a narrow spacing of the latter ones and thus and efficient usage of the frequency resource. A burst which is destined to an end user comprises consequently a frequency extension and a time extension. In this context, a frame comprises bursts which themselves are constituted of OFDM symbols sent on the different sub-channels.

In this embodiment of the invention, the radio communication system is a TDD (Time Division Duplex) system so that first a downlink frame is sent followed by an uplink frame. A person skilled in the art would nevertheless have no difficulty to map the present invention on other type of radio communication networks using FDD (Frequency Division Duplex).

A frame FR to be transferred in a radio communication network is comprising a guard interval GI between the down-link and the up-link part as well as in the uplink part of it, a part where no active interference cancellation NIRZ is performed on, a part for pilot tones PT and a plurality of bursts UL Burst#1,.., UL Burst#6 on which active interference cancellation is performed.

Each burst comprises information related to one end user. The preamble comprise pilot tones which are not dedicated to interference cancellation. It will be clear for those skilled in the art that the invention only concerns the pilot tones part of the frame dedicated for interference cancellation but not the payload part, the guard interval, or the part for which no active interference cancellation is performed, the latter part comprising possibly payload data, so that the invention may apply even if one or several of these parts are missing or containing other type of information.

The present invention will be illustrated using figure 2 which shows a cellular network cell structure in which the method according to the present invention is used, OFDM symbols (symbol #n, #n+1, #n+2) are provided for allocating dedicated pilot tones sent by the different stations which send on a corresponding sub channel in the up-link direction, where it will be clear for those skilled in the art that the method could be equivalently applied in the downlink direction for purpose of a basic training of the interference cancellation algorithm.

According to the present invention, the cellular communication network comprises cells which are allocated to a predefined number of cell sets: Cell set #1, ..., Cell set #3. As shown in figure 2 the cells may be hexagonal and separated in 3 cell sets. It will nevertheless be clear for a person skilled in the art that any other shape of the cells and any other number of cell sets may be used to apply the present invention.

Further according to the present invention, subscriber stations which are located in a cell belonging to cell set 1 will be expected to send their set of pilot tones in OFDM frame symbol #n on the sub channels it has been allocated. For example, on sub channel SC#1 and SC#2, the pilot tones PT1 comprised in the OFDM symbol #n are pilot tones from the subscriber station transmitting UL burst#1 and located in cell set #1.

Similarly subscriber stations which are located in a cell belonging to cell set 2 will be expected to send their set of pilot tones in OFDM frame symbol #n+1 on the sub channels it has been allocated. For example, on sub channel SC#3 and SC#4, pilot tones PT1 comprised in the OFDM symbol #n1 are the pilot tones from the subscriber station transmitting UL burst#2 and located in cell set #2.

Finally subscriber stations which are located in a cell belonging to cell set 3 will be expected to send their set of pilot tones in OFDM frame symbol #n+2 on the sub channels it has been allocated.

Consequently, and to generalise the example shown on figure 2, each cell set is associated to an OFDM symbol of the pilot tones part PT in the OFDM frame, and at least two different cell sets are associated to two different OFDM symbols of the pilot tones part PT.

It will be clear for a person skilled in the art that the number of OFDM symbols provided for allocations of dedicated pilot tones for training of inter-cell interference cancellation can be chosen arbitrarily nevertheless it is preferable to limit this number to 3 OFDM symbols in order not to increase the overhead in the system and to comply with the requirement of IEEE 802.16e mandating a minimum length of the sounding zones of 3 OFDM symbols.

Consequently, pilot tones sent by several subscriber stations belonging to the same cell set will overlap since they are sent in the same OFDM symbol. Nevertheless, the ability of the base station receiving the overlapping pilot tones to distinguish them is increased since the reuse scheme is chosen so as to create overlap, preferably, for not contiguous cells using the fact that the interference between not contiguous cells is lower than between contiguous cells.

In a preferred embodiment of the present invention, as many OFDM symbols are foreseen in the pilot tones zone PT as cell sets. Nevertheless this is not a mandatory requirement for the present invention.

In a further preferred embodiment of the present invention, and as shown on OFDM symbol #n+2 only a subset of the set of pilot tones sent by a subscriber station is transmitted on the pilot tones symbols. This enables it to multiplex on the corresponding pilot tones symbols subsets of pilot tones belonging to different subscriber stations. This presents the advantage that the subsets of pilots tones do not interfere with each others even for subscriber stations belonging to the same cell set.

Consequently, a trade off may be found to still reduce the interference of pilot tones of subscriber stations belonging to the same cell set by preferably sending non overlapping subsets of the pilot tones in the associated OFDM symbol.

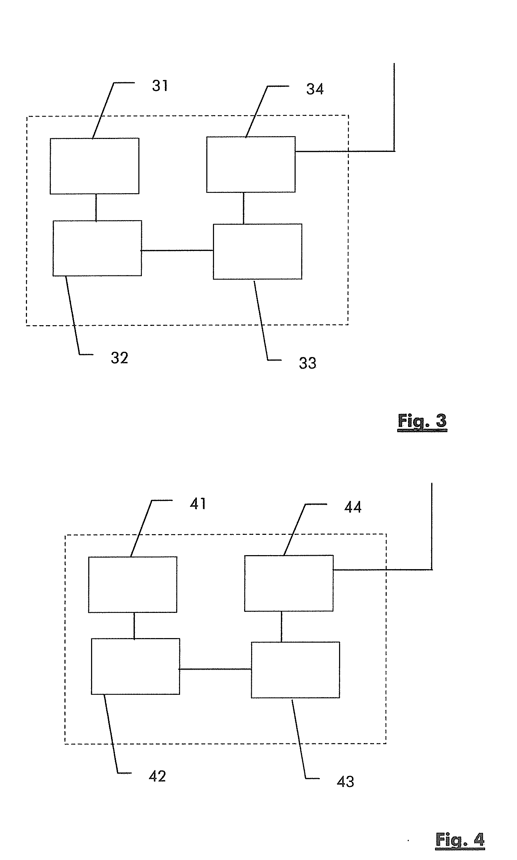

Figure 3 shows a base station implementing the method according to the present invention. A base station according to the present invention comprises a module 31 for being aware of a predefined set of cells it belongs to. Module 31 is linked to module 32 for being aware of a predefined OFDM symbol (#n, ..., #n+2) of the pilot tones part PT associated to the set of cells the base station belongs to. Module 32 is linked to module 33 for sending from said base station a set of pilot tones in said predefined OFDM symbol. Module 33 is itself linked to a Radio Frequency module 34.

According to the present invention, the base station knows in which OFDM symbols of the pilot tones part it is expected to send its pilot tones in the downlink direction. This knowledge is obtained at modules 31, 32 and either fixed as system parameter or received via signalling from a network central entity.

Accordingly module 33 selects the OFDM symbol on the appropriate sub channels on which the pilot tones of the base station are to be sent.

Figure 4 shows a subscriber station implementing the method according to the present invention. A subscriber station according to the present invention comprises a module 41 for being aware of a predefined set of cells it belongs to. Module 41 is linked to module 42 for being aware of a predefined OFDM symbol (#n, ..., #n+2) of the pilot tones part PT associated to the set of cells the base station belongs to. Module 42 is linked to module 43 for sending from said base station a set of pilot tones in said predefined OFDM symbol. Module 43 is itself linked to a Radio Frequency module 44.

According to the present invention, the subscriber station knows in which OFDM symbols of the pilot tones part it is expected to send its pilot tones in the uplink direction. This knowledge is obtained at modules 41, 42 and either fixed as system parameter or received via signalling from a network central entity.

Accordingly, module 43 selects the OFDM symbol of the appropriate sub channels on which the pilot tones of the subscriber station are to be sent.

## Claims

1. Method for improving inter cell interference cancellation in an cellular radio communication system, said cellular radio communication system sending OFDM frames on an air interface, each OFDM frame comprising a pilot tones part (PT) and a payload part comprising a plurality of bursts (UL burst #1, ... UL burst #6), said method comprising the steps of:
- Building a predefined number of sets of cells (cell set #1, ..., cell set #3) in said cellular radio communication network;
- Associating a predefined OFDM symbol (#n, ..., #n+2) of said pilot tones part (PT) to each set of cells (cell set #1, ..., cell set #3), at least two different sets of cells (cell set #1, ..., cell set #3) being associated two different OFDM symbols of said pilot tones part (PT);
- Sending from a station belonging to a predefined set of cells (cell set #1, ..., cell set #3) a set of pilot tones in said predefined OFDM symbol (#n, ..., #n+2) associated to said set of cells (cell set #1, ..., cell set #3).

2. Method according to claim 1, wherein said sets of cells are obtained by applying a frequency reuse scheme over the cells of said cellular radio communication network, the frequency reuse scheme depending on the number of sets of cells.

3. Method according to claim 1, wherein stations belonging to different sets of cells and scheduled on the same sub channel send sets of pilots tones on two different OFDM symbols of said OFDM frame.

4. Method according to claim 1, wherein only a subset of said set of pilot tones is sent on said OFDM symbol associated to said set of cells.

5. Method according to claim 1, wherein a whole or a subset of several sets of pilot tones sent by stations scheduled on the same sub channel and belonging to the same set of cells are multiplexed in the OFDM symbol associated to said set of cells.

6. Method according to claim 1, wherein said sets of pilot tones are comprised in a 3-OFDM-symbol-broad sounding zone on each of said sub channels, a frequency reuse 3 scheme being applied to the cells of said cellular radio communication network.

7. Method according to claim 1, wherein said radio communication system is using Orthogonal Frequency Division Multiple Access technology on the air interface, each frame having a time and frequency extension.

8. Base station adapted to be used in a cellular radio communication system, said cellular radio communication system exchanging OFDM frames on an air interface, each OFDM frame comprising a pilot tones part (PT) and a payload part comprising a plurality of bursts (UL burst #1, ..., UL burst #6), said base station comprising:
Means (31) for being aware of a predefined set of cells it belongs to, said cellular radio communication network being split in several sets of cells (cell set #1, ..., .cell set #3);
- Means (32) for being aware of a predefined OFDM symbol (#n, ..., #n+2) of said pilot tones part (PT) associated to said predefined set of cells;
- Means (33) for sending from said base station a set of pilot tones in said predefined OFDM symbol.

9. Base station according to claim 8, adapted to send bursts in the downlink direction.

10. Subscriber station adapted to be used in a cellular radio communication system, said cellular radio communication system exchanging OFDM frames on an air interface, each OFDM frame comprising a pilot tones part (PT) and a payload part comprising a plurality of bursts (UL burst #1, ..., UL burst #6), said subscriber station comprising:
Means (41) for being aware of a predefined set of cells it belongs to, said cellular radio communication network being splitted in several sets of cells (cell set #1, ..., .cell set #3);
Means (42) for being aware of a predefined OFDM symbol (#n, ..., #n+2) of said pilot tones part (PT) associated to said predefined set of cells
Means (43) for sending from said base station a set of pilot tones in said predefined OFDM symbol.

11. Subscriber station according to claim 10, adapted to send bursts in the uplink direction.
